# EUROPÄISCHE PATENTSCHRIFT

(11) **EP 2 206 213 B1**
(45) Veröffentlichungstag und Bekanntmachung des Hinweises auf die Patenterteilung: **29.11.2017**
(21) Anmeldenummer: 08804826.9
(22) Anmeldetag: 26.09.2008
(51) Int. Cl.: H02J 7/00

(54) **GALVANSICHE TRENNUNG ZWISCHEN ZELL-LADUNGSAUSGLEICH UND STEUERUNG EINES HYBRIDANTRIEBS**
GALVANIC SEPARATION BETWEEN CELL CHARGE BALANCE AND CONTROL OF A HYBRID DRIVE
SÉPARATION GALVANIQUE ENTRE UNE COMPENSATION DE CHARGE DE CELLULE ET UNE COMMANDE D'UN ENTRAÎNEMENT HYBRIDE

(30) Priorität: 24.10.2007 DE 102007050821
(43) Veröffentlichungstag der Anmeldung: 14.07.2010
(73) Patentinhaber: Robert Bosch GmbH, 70442 Stuttgart (DE)
(72) Erfinder: WOLF, Michael, 70806 Kornwestheim (DE)
(86) Internationale Anmeldenummer: PCT/EP2008/062954
(87) Internationale Veröffentlichungsnummer: WO 2009/053218

(56) Entgegenhaltungen:
- DE-A1-102004 031 216
- DE-A1-102005 041 824
- DE-B3- 10 347 110
- US-A1- 2007 188 948
- US-B1- 6 515 878

## Beschreibung

### Stand der Technik

Die Erfindung betrifft die Steuerung eines Fahrzeug-Elektroantriebs, beispielsweise eines Hybridfahrzeuges. In Fahrzeugen mit Elektroantrieb oder mit Hybridantrieb werden hohe Traktionsenergiemengen in elektrischen Akkumulatoren gespeichert. Um eine geeignete Betriebsspannung (typischerweise 250-500 V) zu erreichen, sind hierzu galvanische Zellen in großer Zahl seriell zusammengeschaltet. Durch die Seriellschaltungen ergeben sich selbstverstärkende Effekte, so dass die einzelnen gespeicherten Energiemengen sowie der Ladestrom aktiv zwischen den Zellen ausgeglichen werden muss. Hierzu wird eine Ausgleichsschaltung vorgesehen, welche die Anzapfungen innerhalb der Seriellschaltung der Akkumulatoren selektiv miteinander verbindet. Die Ausgleichsschaltung arbeitet daher notwendigerweise mit der hohen Betriebsspannung des Elektroantriebs auf dem Potentialniveau des Antriebs.

Andererseits werden nahezu alle anderen Elemente des Fahrzeugs mit einem Bordnetz von typischerweise 12 V versorgt. Durch die niedrige Spannung ist gewährleistet, dass, im Gegensatz zur Betriebsspannung des Antriebs, auch bei direkter Berührung keine Gesundheitsgefahren bestehen. Insbesondere die Steuerung des Energiemanagements und somit auch die Steuerung des aktiven Ausgleichs zwischen den einzelnen Akkumulatoren befindet sich auf Bordnetzpotential. Daher ist eine galvanische Trennung zwischen dem Bordnetz und dem hohen Betriebsstrom des Antriebs erforderlich, insbesondere im Hinblick auf mögliche Kurzschlüsse oder Unfälle, bei denen verhindert werden muss, das Teile des Fahrzeugs oder Personen mit dem Antriebspotential in Kontakt kommen.

Bislang wurde zur einzelnen Trennung des Lastkreises (auf dem Potential des Antriebs) und des Steuerkreises (auf dem Potential des Bordnetzes) eine aufwändige Isolationsvorrichtung benötigt. Während die Dioden nur Schutz vor Potentialumkehr bieten, sind beispielsweise optoelektrische Isolationselemente oder Transformatoren nicht zuverlässig. Zum einen arbeiten Opto-MOS-Schalter bei hohen Temperaturen nicht zuverlässig. Zum anderen wird durch die hohe Anzahl an Akkumulatoren (> 100), welche die Batterie-Serienschaltung bilden, eine sehr hohe Anzahl an Elementen benötigt, so dass sich hohe Kosten und ein großer Platzbedarf ergibt. Während Messeinrichtungen zum einzelnen Erfassen der Zellenspannung mit hohen Widerständen von den Potential getrennt werden können, um im Fehlerfall den Stromfluss stark zu begrenzen, muss die Ausgleichsschaltung auf Grund der Funktion des Stromübertrags zwischen den Zellen in mehr oder minder direkten Kontakt zu den Zellen sein. Dadurch ist die Verwendung von hohen Widerständen zur Abkopplung des Lastkreises vom Steuerkreis für Ausgleichsschaltungen nicht einsetzbar.

Die Druckschrift DE 10 2005 041 824 A1 offenbart eine Vorrichtung und ein Verfahren zum Ladungsausgleich zwischen Einzelzellen eines Doppelschichtkondensators. Jeder Einzelzelle des Doppelschichtkondensators ist ein Kondensator zugeordnet, dessen erster Anschluss über einen ersten Schalter mit einem ersten Anschluss der zugeordneten Zelle und über einen zweiten Schalter mit einem zweiten Anschluss der zugeordneten Zellen verbunden werden kann. Der zweite Anschluss des zugeordneten Kondensators ist mit den zweiten Anschlüssen aller weiteren Kondensatoren verbunden.

Die Druckschrift DE 10 2004 031 216 A1 betrifft eine Vorrichtung und ein Verfahren zum Ladungsausgleich in Reihe geschalteter Energiespeicher. Dabei wird der gesamten Anordnung aus den in Serie geschalteten einzelnen Energiespeichern Energie entnommen, die Spannung herabgesetzt und einem Wechselspannungsbus zugeführt. Die Spannung am Wechselspannunqsbus steigt dabei so weit an, bis sie der Spannung an dem niedrigsten Energiespeicher entspricht und diesen auflädt.

Die Druckschrift DE 103 45 306 A1 offenbart eine Einzelzellenüberwachung für eine Batterie mit einer Betriebsspannung von 12 V. Hierbei werden die einzelnen Zellen hinsichtlich ihrer Spannung überwacht und es werden Ausgleichungsmaßnahmen ergriffen, wobei jedoch das Problem der Trennung gegenüber einem deutlich höheren Betriebspotential nicht betrachtet wird.

Es ist daher eine Aufgabe der Erfindung, eine Vorgehensweise vorzusehen, mit der das hohe Betriebspotential eines Elektroantriebs von dem Potential des Bordnetzes eines Fahrzeugs effektiv und mit geringem Aufwand getrennt werden kann.

### Offenbarung der Erfindung

Mit der erfindungsgemäßen Schaltung und dem erfindungsgemäßen Verfahren lassen sich Bordnetzpotential und Antriebspotential mit preiswerten und verlässlichen Mitteln galvanisch voneinander trennen. Die eingesetzten Elemente sind kostengünstig, Platz sparend, erfordern einen geringen Schaltungsaufwand und können zum Teil mittels preiswerter diskreter oder integrierter Bauteile oder mittels einfacher Softwareprogrammierung umgesetzt werden. Es ergeben sich keine Temperaturabhängigkeiten wie bei optischen Kopplern und keine Sättigungseffekte bzw. Frequenzabhängigkeiten wie sie durch die Materialeigenschaft des ferromagnetischen Kerns eines Trenn-Transformators entstehen. Mit der erfindungsgemäßen Schaltung und dem erfindungsgemäßen Verfahren lässt sich ein großes Spektrum an Schaltelementen ansteuern, die zum Stromausgleich vorgesehen werden, insbesondere auch Elemente, die einen hohen Steuerstrom erfordern. Gegenüber optischen Kopplern und gegenüber Transformatoren ergeben sich Erfordernisse hinsichtlich Kosten sowie Raum, die nur einem Bruchteil der Erfordernisse entsprechen, die bei Schaltungen gemäß dem Stand der Technik entstehen. Da für eine Traktionsbatterie üblicherweise eine Vielzahl (> 100) von Übertragungskanälen erforderlich sind, ergeben sich dadurch signifikante Einsparungen bei der Verwendung innerhalb von Elektroantrieben bzw. Hybridantrieben.

Erfindungsgemäß wird eine Serien-Kapazitätsschaltung zum Trennen der Potentiale verwendet. Vorzugsweise werden die Steuersignale (falls diese auf Grund des Schaltungsrhythmus niederfrequent sind), durch Modulation auf eine hohe Frequenz moduliert, so dass ein Serien-Kondensator, der die serielle kapazitive Verbindung vorsieht, im pF-Bereich sein kann und gleichzeitig einen hohen Steuerstrom überträgt. Um die erfindungsgemäße serielle kapazitive Verbindung zur Übertragung eines Steuersignals und zur gleichzeitigen galvanischen Entkopplung von Steuerkreis und Lastkreis zu verwenden, wird vorzugsweise die Kapazität an die Frequenz angepasst, die das Steuersignal aufweist. Vorzugsweise werden Frequenzen von größer als 1 kHz, größer als 10 kHz, größer als 100 kHz oder insbesondere größer als 1 MHz verwendet, um die Signalübertragung zu gewährleisten und gleichzeitig die galvanische Trennung durch geringe Kapazitätswerte zu ermöglichen. Ist daher vorgesehen, ein Stromlenkungselement anzusteuern, das mit Potentialanzapfungen einer seriellen Batterieschaltung mit hoher Betriebsspannung (größer 200 V, größer 300 V oder ähnlich) verbunden ist, wird ein Steuersignal mit hoher Frequenz für das Zeitintervall erzeugt, in dem das Stromlenkungselement aktiviert sein soll. Das hochfrequente Steuersignal wird beispielsweise von dem Steuerkreis selbst erzeugt, beispielsweise von einem Mikrocontroller, der einen periodischen Flankenwechsel eines Ausgangs während der Aktivierung des Stromlenkungselements vorsieht, durch einen an- bzw. ausschaltbaren Oszillator, der dem gewünschten Steuerverhalten angesteuert wird, oder durch einen kontinuierlich arbeitenden Oszillator, dessen Signal durch ein schaltbares Weiterleitungselement läuft.

Eine erste Steuerkomponente kann somit ein Signal bzw. einen Befehl erzeugen, das bzw. der das Zeitintervall, d.h. Anfang, Dauer und Ende, vorgibt, in der das Stromlenkungselement aktiv sein soll. Eine zweite Komponente kann aus diesem Signal bzw. aus diesem Befehl ein Signal erzeugen, das während des Zeitintervalls ein ersten Wechselanteil hat, und vor bzw. nach diesem Zeitintervall einen zweiten Wechselanteil hat, der beispielsweise auch gleich null sein kann. Da die erfindungsgemäße serielle kapazitive Verbindung nur den Wechselanteil überträgt, und ansonsten für den Gleichstromanteil eine galvanische Trennung vorsieht, erhält das Stromlenkungselement zwei verschiedene Wechselanteile, einen ersten für die Zeit während des Zeitintervalls und einen zweiten für die Zeit außerhalb des Zeitintervalls. Die verschiedenen Wechselanteile können in der zweiten Steuerkomponente durch einen Softwarecode erzeugt werden, wobei die erste und die zweite Steuerkomponente als Software vorgesehen sind, die auf einem Mikrocontroller oder auf einer CPU ablaufen. Alternativ kann der Steuerkreis, der als Hardware-/Software-Kombination vorgesehen sein kann, ein Signal, einen Befehl oder einen Pegel ausgeben, der dem anzusteuernden Aktiv- bzw. Inaktivzustand des Stromlenkungselements entspricht, und die Wechselanteile können durch einen Oszillator vorgesehen werden, der an den Steuerkreis angeschlossen ist. Die beiden Wechselanteile, die jeweils einem der Zustände aktiv bzw. inaktiv des Stromlenkungselements zugeordnet sind, können sich hinsichtlich der Frequenz, der Pulsweite, der zu Grunde liegenden Wellenform und/oder hinsichtlich der Amplitude (beispielsweise Spitzen-Spitzen-Spannung, RMS oder einem weiteren gemittelten Pegelwert) unterscheiden. Auf Grund der Frequenzselektivität der kapazitiven Verbindung kann somit ein Wechselanteil mit niedriger Frequenz von einem Wechselanteil mit hoher Frequenz unterschieden werden, wobei vorzugsweise die serielle kapazitive Verbindung auf der Ausgleichsschaltungsseite mit einer definierten Last, beispielsweise einer ohmschen Last, beaufschlagt wird. Insbesondere bei der Verwendung eines RC-Glieds, wobei die Kapazität des RC-Glieds die serielle kapazitive Verbindung darstellt, kann somit durch die Auswahl der Frequenz des Wechselanteils die jeweiligen Wechselanteile auf der Ausgleichsschaltungsseite unterschieden werden. Als Modulatoren bieten sich daher an: spannungsgesteuerte Oszillatoren, deren Ausgangsfrequenz von einem Eingangspannungssignal abhängt, amplitudengesteuerte Oszillatoren, vorzugsweise mit fester Frequenz, und insbesondere RC- bzw. LC- bzw. Flipflop-Schaltungen, die sich durch ein Enable-Eingang oder durch die gezielte An- bzw. Abschaltung der Oszillator-Versorgungsspannung steuern lassen. Ferner kann der Modulator durch einen Softwarecode und/oder durch bestimmte Ansteuerung einer Ausgangsschnittstelle eines Mikrocontrollers oder einer CPU gesteuert werden, beispielsweise durch Abgabe eines Signals mit fester Frequenz und zwei verschiedenen Pegeln (0/1), die jedoch unterschiedliche Muster aufweisen. Beispielsweise kann ein Muster mit hoher Periodizität (010101...oder 000...) verwendet werden, um einen ersten Wechselanteil zu erzeugen, und ein Muster mit einer geringeren Periodizität (11110000...) um einen zweiten Wechselanteil zu erzeugen. Bei diskreten Signalen kann somit eine Folge mit abwechselnden Pegeln (hoher Wechselanteil) und eine Folge mit im wesentlichen selten ändernden oder unveränderlichen Pegeln (niedriger/kein Wechselanteil) verwendet werden. Gemäß einer besonders bevorzugten Ausführungsform hat der Wechselanteil, der dem Inaktiv-Zustand des Stromlenkungselements entspricht, eine Leistung von 0 (beispielsweise Pegel von 0 V oder eine zeitlich konstante Spannung). Derjenige Wechselanteil, der dem Aktivzustand des Stromlenkungselements entspricht, hat vorzugsweise einen Wechselanteil, der nach Übertragung durch die serielle kapazitive Verbindung ein Steuersignal vorsehen kann, das das Stromlenkungselement aktiviert. Im Falle eines spannungsgesteuerten Oszillators kann der erste Wechselanteil mit einer Frequenz vorgesehen werden, die nach der Übertragung über die serielle kapazitive Verbindung an dem Stromlenkungselement einen zur Aktivierung ausreichenden Strom bzw. eine ausreichende Spannung erzeugt, wohingegen der zweite Wechselanteil mit einer geringeren Frequenz keine Aktivierung des Stromlenkungselements auf Grund des zu geringen Stroms bzw. der zu geringen Spannung hervorruft.

Zur Umwandlung des Signals, das über die serielle kapazitive Verbindung übertragen wurde, d.h. zur Umsetzung des ersten und des zweiten Wechselanteils, wird dieser vorzugsweise gleichgerichtet, und, falls notwendig, geglättet, um so einen Strom bzw. eine Spannung zu erzeugen, mit der das Stromlenkungselement gesteuert werden kann. Die Gleichrichterschaltung ist vorzugsweise eine Vollwellenschaltung und berücksichtigt beide Halbwellen. Die darauf folgende oder vorhergehende, mit der Gleichrichterschaltung verbundene Glättschaltung kann durch einen Energiepuffer wie einen Kondensator vorgesehen werden, der aus der pulsierenden Gleichspannung, die aus dem Gleichrichter tritt, eine Gleichspannung mit geringem Wechselanteil oder mit keinem Wechselanteil erzeugt. Um den Arbeitspunkt des Glättungskondensators zu stabilisieren, ist vorzugsweise eine vordefinierte Last parallel zu dem Glättungskondensator angeschlossen. Dadurch wird ein definierter Arbeitspunkt bzw. Arbeitsbereich definiert, wobei die Last durch den Steuereingang des Stromlenkungselements ebenso zur Definition des Arbeitspunkts beiträgt. Als Stromlenkungselement kann beispielsweise ein MOS-Feldeffekttransistor verwendet werden, dessen Gate an die Gleichrichterschaltung und die Glättschaltung angeschlossen ist. In diesem Fall trägt die vordefinierte Last dazu bei, die Steuerspannung durch einen vordefinierten Stromfluss in Grenzen zu halten und Pegeleinbrüche bei Schaltungszustandsänderungen zu verringern.

In einer besonders einfachen Ausführungsform umfasst die Trennschaltung den Kopplungs-und Gleichrichterteil einer Spannungsverdopplerschaltung, d.h. eine Serienkapazität zur Einkopplung der Eingangs-Wechselspannung sowie ein Vollphasengleichrichter, bestehend aus zwei Dioden. Eine weitere Kapazität ist mit der Gleichrichtschaltung verbunden, um den Gleichanteil aufzunehmen. In dieser Ausführung umfasst die Trennschaltung ferner einen Glättungskondensator, der parallel zu dem Spannungsausgang der Spannungsverdopplerschaltung vorgesehen ist. Anstatt eines Zerhackers im Falle einer vollständigen Spannungsverdopplerschaltung wird ein an- bzw. ausschaltbarer Oszillator verwendet, der gemäß dem Pegel eines Steuersignals an- und ausgeschaltet wird. Die Amplitude des so modulierten Steuersignals beträgt daher 0 im Inaktivzustand und erreicht einen bestimmten konstanten Pegel im aktivierten Zustand. Dadurch wird eine einfache Amplitudenmodulation erreicht, die in direkter Weise zur Ansteuerung des Stromlenkungselements verwendet werden kann. Auf Grund der so vorgesehenen Amplitudenmodulation mit zwei Pegeln (0 oder V_{PP}) bestehen keine besonders hohen Anforderungen an die Frequenzstabilität des Oszillators, so dass einfache RC-Flipflop-Schaltungen, astabile Multivibratoren oder beliebige Verstärkerschaltungen mit selbsterhaltender Rückkopplung mit Schwingungsverhalten verwendet werden können, deren Funktion bzw. Angabe durch gezielte Zuführung einer Betriebsspannung oder Aktivierung durch ein Enable-Eingang gesteuert werden kann. Als Oszillator können ferner auch Oszillatoren verwendet werden, die bereits zu einem anderen Zweck eingesetzt sind, beispielsweise ein Taktsignal eines Mikrocontrollers oder einer CPU oder ein Datensignal, das einen Wechselanteil mit einer Mindestleistung aufweist. Die Anzapfung einer Leitung, die ein derartiges Wechselsignal führt, kann somit als Wechselanteilquelle bzw. Frequenzgenerator angesehen werden, ggf. inklusive einer Pufferschaltung. Im Falle eines durchgehend betriebenen Oszillators der bereits als Taktquelle für weitere Vorrichtungen dient, kann eine Schaltstufe bzw. eine Pufferschaltung eingesetzt werden, die gemäß Ansteuerung das Taktsignal überträgt, oder nicht. Beispielsweise kann eine logische UND-Verknüpfung verwendet werden, die einen Eingang für das Taktsignal und einen Eingang für das Enable-Signal vorsieht, wobei das Steuersignal des Steuerkreises an den Enable-Eingang angeschlossen wird.

Die Erfindung wird ferner gelöst durch eine Ausgleichsschaltung, die eine erfindungsgemäße Trennschaltung umfasst, und die ferner mit mindestens einem Stromlenkungselement verbunden ist, das Strom bzw. Ladung zwischen verschiedenen Zellen einer Batteriereinschaltung ausgleichen kann. Vorzugsweise ist für jede Zelle einer Batterie-Reihen-Schaltung oder für zwei benachbarte Verknüpfungspunkte von Zellen innerhalb einer Batterie-Reihen-Schaltung ein Schaltelement, eine Trennschaltung und ein Steuersignal vorgesehen. Die Ausgleichsschaltung umfasst somit vorzugsweise einen Kontakt zu jeder Anzapfung, d.h. Verbindungsstelle zwischen zwei benachbarten Zellen einer Batteriereinschaltung, wobei jedem Stromlenkungselement genau eine Trennschaltung zugeordnet ist. Jeder Trennschaltung kann ein Oszillator zugeordnet sein, der gemäß einem zugeordnetem Steuersignal des Steuerkreises betätigt wird. Alternativ können für alle oder für eine Gruppe von Trennschaltungen ein Oszillator vorgesehen sein, wobei jede Trennschaltung ein Schaltelement umfasst, das gemäß dem zugeordnetem Steuersignal das Wechselsignal des Oszillators an die serielle kapazitive Verbindung weitergibt.

Ferner wird die Erfindung von dem erfindungsgemäßen Verfahren umgesetzt, welches vorsieht, dass Steuersignal bzw. das Ausgleich-Steuersignal über die serielle kapazitive Verbindung zu übertragen, um somit den Gleichanteil abzutrennen. Durch die Abtrennung des Gleichanteils wird die galvanische Trennung vorgesehen. Wie bereits bemerkt kann das Steuersignal zuvor moduliert werden, um einen ausreichend hohen Wechselanteil zu erzeugen. Erfindungsgemäß wird somit der Pegel eines Steuersignals, das den gewünschten Aktivierungszustands des zugehörigen Stromlenkungselements angibt, in den Wechselanteil eines Signals umgesetzt, das mittels der serielle kapazitive Verbindung übertragen wird. Durch die Abbildung des Steuersignalpegels auf den Wechselanteil kann bei der Übertragung über die serielle kapazitive Verbindung der Gleichanteil abgetrennt werden, wodurch die gewünschte galvanische Trennung zwischen Steuerkreis und Lastkreis erreicht wird. Da die Stromlenkungselemente vorzugsweise mit Gleichspannung oder Gleichstrom angesteuert werden, sieht das Verfahren ferner vor, den als Wechselanteil abgebildeten Steuerpegel, der als Wechselanteil übertragen wurde, gleichzurichten und vorzugsweise auch zu glätten, um so die ursprüngliche Signalform des Steuersignals wiederherzustellen. Gleichzeitig kann beim Gleichrichten, kapazitiven Übertragen und beim Glätten der abgebildete Signalpegel an die Eigenschaften des Stromlenkungselements angepasst werden, beispielsweise wenn ein bestimmter Steuerpegel erforderlich ist. Obwohl die oben beschriebene Vorrichtung und das oben beschriebene Verfahren zur Übertragung eines Steuersignals mit zwei Zuständen dargestellt wurde, kann die Erfindung auch vorgesehen werden, um mehrere Pegel oder eine wertekontinuierlichen bzw. zeitkontinuierlichen Werteverlauf abzubilden. Insbesondere können eine bestimmte Anzahl an Pegelstufen, eine sehr hohe Anzahl an Pegelstufen sowie ein kontinuierlicher Werteverlauf vorgesehen werden. Die Amplitudenmodulation bzw. Frequenzmodulation kann somit nicht nur zwei sondern auch mehrere oder unendlich viele Amplituden bzw. Frequenzstufen vorsehen, wie es bei der analogen Amplitudenmodulation oder analogen Frequenzmodulation (beispielsweise mittels eines VCO, Spannungsgesteuerten Oszillators) üblich ist. Im Falle eines Elektroantriebs ist jedoch zur Minimierung der Verlustleistung durch das Stromlenkungselement ein Signal vorgesehen, das das Steuerungselement entweder vollständig an- oder vollständig ausschaltet.

Als Oszillator wird vorzugsweise ein Oszillator verwendet, der eine definierte Frequenzverteilung hat, vorzugsweise ein Frequenzverteilung mit einer geringen Streuung (beispielsweise Sinus) oder einen Oszillator, der besonders einfach vorgesehen werden kann (beispielsweise einen Rechteckgenerator). Die beiden oben beschriebenen verschiedenen Wechselanteile, welche jeweils einem Zustand zugeordnet sind, können somit auch durch verschiedene Frequenzverteilung vorgesehen werden. Da gemäß einer bevorzugten Ausführung nur zwei Pegel voneinander unterschieden werden müssen, unterliegt die Genauigkeit der Wellenform, d.h. die Varianz der Streuung im Frequenzbereich keinen besonderen Anforderungen, so dass Veränderungen in der Frequenzverteilung durch die Übertragung in weitem Maße akzeptabel sind. Vorzugsweise werden Oszillatoren mit relativ geringer Frequenzstabilität und mit einer Frequenz von größer als 100 kHz verwendet, da diese besonders preiswert und mit geringen Kapazitätswerten herzustellen sind. Ferner ermöglicht die hohe Frequenz, dass als kapazitive Verbindung Kondensatoren mit sehr geringer Kapazität (< 100 pF) verwendet werden können, so dass im Fehlerfall über diese nur eine geringe Spannungsspitze zu erwarten ist, wodurch der Strom, der beim Auftreten des Fehlers fließt, gering ist. An dem Glättungskondensator kann ferner zur Vermeidung von Spannungsspitzen ein Überspannungselement vorgesehen sein, beispielsweise eine einzelne Zenerdiode oder eine Antiparallelschaltung von Zenerdioden, die jeweils in Durchlassrichtung mittels einer weiteren Diode gesperrt werden. Alternativ sind Varistoren als Überspannungsschutz einsetzbar. Falls der Glättungskondensator mit einem Überspannungsschutz verschaltet ist, kann eine vordefinierte ohmsche Last zur Definierung des Betriebspunkts weggelassen werden. Prinzipiell können als Glättungselement prinzipiell Kondensatoren und Induktivitäten einzeln oder in beliebiger Kombination verwendet werden.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: Eine erfindungsgemäße Trennschaltung in Prinzipdarstellung; und
- Figur 2: Eine bevorzugte Ausführungsform der erfindungsgemäßen Trennschaltung.

### Ausführungsformen der Erfindung

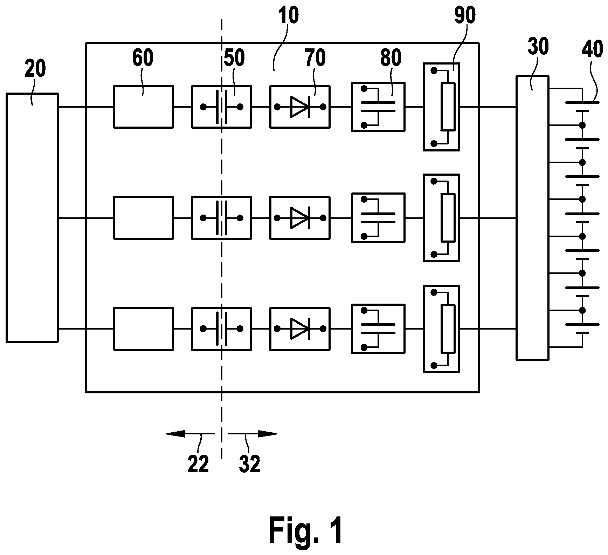

In der Figur 1 ist die erfindungsgemäße Trennschaltung in einer Prinzipdarstellung wiedergegeben. Die Trennschaltung 10 verbindet einen Steuerkreis 20 mit einer Lastkreis-Ausgleichsschaltung 30, welche wiederum an eine serielle Batterieschaltung 40 angeschlossen ist. Die erfindungsgemäße Trennschaltung 10 umfasst somit eine Steuerseite 22 und eine Ausgleichsschaltungsseite 32. Die Trennschaltung 10 verbindet eine Vielzahl von Ausgängen des Steuerkreises 20 mit einer Vielzahl von Eingängen der Lastkreis-Ausgleichsschaltung 30, wobei vorzugsweise für jedes Ausgangs/Eingangs-Paar eine Teilschaltung der Trennschaltung 10 vorgesehen ist, und jede Teilschaltung eine serielle kapazitive Verbindung vorsieht. In einer bevorzugten Ausführungsform umfasst die Trennschaltung so viele Steuersignal-Eingänge für den Steuerkreis 20 wie Ausgänge für die Lastkreis-Ausgleichsschaltung 30 und verbindet jeweils einen der Eingänge mit genau einem zugeordneten der Ausgänge über eine eigene serielle kapazitive Verbindung 50. Die Figur 1 zeigt die Trennschaltung 10. Vorzugsweise sind alle Teilschaltungen der Trennschaltung gleich. Die dargestellte Teilschaltung umfasst einen Eingang für ein Steuerkreissignal 20, der mit einem Modulator 60, beispielsweise ein rückgekoppelter LC-Schwingkreis, verbunden ist. Dieser wiederum ist mit einer serielle kapazitive Verbindung 50 verbunden, die die galvanische Trennung vorsieht. An die serielle kapazitive Verbindung 50 sind eine Gleichrichterschaltung 70, eine Glättschaltung 80 und ein definierter Parallel-Lastwiderstand 90 in dieser Reihenfolge angeschlossen. Auf den Parallel-Lastwiderstand folgt ein Ausgang für die Lastkreis-Ausgleichsschaltung 30. Die Lastkreis-Ausgleichsschaltung 30 weist vorzugsweise für jeden Ausgang der Trennschaltung ein Stromlenkungselement auf (nicht dargestellt), welches eine Batterie bzw. einen Abgriff der seriellen Batterieschaltung 40 mit einem weiteren Abgriff bzw. einer weiteren Batterie zum Zwecke des Ausgleichs steuernd verbindet. Der Modulator 60 erhält von dem zugeordnetem Eingang der Trennschaltung ein Signal, dessen Pegel angibt, ob der Modulator 60 ein Wechselstromsignal ausgibt, oder nicht. Der Modulator 60 ist somit als Oszillator ausgeführt, der ein Wechselsignal mit zwei verschiedenen Amplituden (0 und 100 %) ausgibt. Diese Modulation ist notwendig, um die Steuerinformation von dem Steuerkreis 20, jedoch nicht das zugehörige Potential zu übertragen. Nach der Übertragung des Signals über die serielle kapazitive Verbindung, vorzugsweise einen Serien-Kondensator oder ein Serien-Kondensatorpaar, wird das übertragene Wechselsignal gleichgerichtet, vorzugsweise mittels eines Vollwellengleichrichters 70, und daraufhin von einer Glättschaltung 80, beispielsweise einen Parallelkondensator, geglättet. Zur Definition eines spezifizierten Arbeitspunktes ist an den Glättkondensator 80 ein definierter Parallel-Lastwiderstand 90 (oder in Kombination hiermit) angeschlossen. Dies ist insbesondere vorteilhaft, wenn die Lastkreis-Ausgleichsschaltung 30 MOSFET-Transistoren als Stromlenkungselemente vorsieht, deren Gate das von der Trennschaltung übertragene Signal erhält. Statt eines Lastwiderstands 90 kann auch ein Überspannungsschutz-Element verwendet werden, beispielsweise eine Zenerdiode. In der Figur 1 dargestellten Ausführung gibt der Steuerkreis ein unmoduliertes Steuersignal ab. Um dieses zur Übertragung über die serielle kapazitive Verbindung 50 aufzubereiten, wird das so erhaltene Signal dem Oszillator 60 zugeführt, der einen Wechselanteil erzeugt, welcher dem Pegelsignal des Steuerkreises 20 entspricht. In nicht dargestellten bevorzugten Ausführungen umfasst die Trennschaltung 10 weniger Oszillatoren 60 als Eingänge bzw. Ausgänge, beispielsweise nur einen, der ein kontinuierliches Wechselsignal ausgibt, das mittels einer steuerbaren Weiterleitungsschaltung (beispielsweise einen UND-Logikschaltkreis) gemäß dem jeweiligen Steuersignal weitergeleitet wird, oder nicht. Ferner kann der Steuerkreis 20 anstatt eines Steuerpegels ein Wechselsignal ausgeben, dessen Amplitude von dem gewünschten Steuerzustand (an/aus) abhängt. Der Steuerkreis kann somit selbst die Modulation vorsehen, in dem dieser den gewünschten Steuerzustand nicht als konstanten Pegel sondern als Wechselanteil ausgibt.

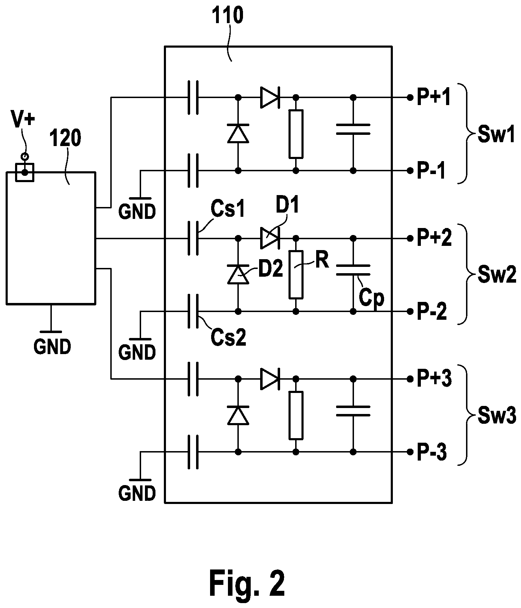

Die Figur 2 zeigt eine bevorzugte Ausführungsform der erfindungsgemäßen Trennschaltung 110, die an einen erfindungsgemäßen Steuerkreis 120 angeschlossen ist. Die Steuerschaltung umfasst drei Ausgänge, die über drei getrennte Teilschaltungen der Trennschaltung 110 an jeweilige Ausgängen Sw1-3 angeschlossen sind. Die Trennschaltung 110 erhält bereits modulierte Steuersignale von dem Steuerkreis 120, beispielsweise durch Verwendung von Modulatoren bzw. schaltbaren Oszillatoren, die von den Steuerzuständen des Steuerkreises gesteuert werden. Die drei Teilschaltungen der Trennschaltung 110 sind gleich ausgeführt und identisch dimensioniert. Im Folgenden wird die detailliert dargestellte, mittlere Teilschaltung näher betrachtet. Das vom Steuerkreis 120 bzw. von der Steuerseite stammende Wechselsignal gelangt an eine modifizierte Teilschaltung eines Spannungsverdopplers. Zunächst wird das vom Steuerkreis 120 stammende Wechselsignal an einen ersten Serienkondensator Cs1 angekoppelt, an den sich eine Vollwellen-Gleichrichterschaltung anschließt, die von den Dioden D1 und D2 gebildet wird. An die Gleichrichterschaltung ist ebenso ein weiterer Serienkondensator Cs2 verbunden, der die Gleichrichterschaltung mit Masse, d.h. Masse der Steuerseite, GND, verbindet. Die Entkopplung wird somit über eine serielle kapazitive Verbindung vorgesehen, die zwei Serienkondensatoren Cs1 und Cs2 umfasst. Der obere Kondensator Cs1 überträgt das Ausgleich-Steuersignal, wohingegen der Kondensator Cs2 den Potentialausgleich zwischen der Masse der Steuerseite GND und einem Minuspotential P-2 der Ausgleichsschaltungsseite vorsieht. Liegt am Serienkondensator Cs1 eine aufsteigende Flanke an, so wird der nach der Gleichrichterschaltung D1, D2 angeschlossene Parallelkondensator C_{P} über die Diode D1 aufgeladen, wobei die Diode D2 sperrt. Bei einer fallenden Flanke wird der Parallelkondensator Cp über die Diode D2 geladen. Gleichzeitig sieht der Serien-Kondensator Cs2 eine Potentialtrennung zwischen dem negativen Potential der Steuerseite GND und dem negativen Potential der Ausgleichsschaltungsseite P-2 vor. Dadurch wird bei jeder Halbwelle der Parallelkondensator C_{P} geladen, wobei der Parallelkondensator Cp die Glättschaltung vorsieht. Parallel zur Glättschaltung ist ein Parallel-Lastwiderstand angeschlossen, der neben des definierten Arbeitspunktes dazu dient, den geladenen Kondensator C Index P wieder zu entladen, wenn über die serielle kapazitive Verbindung keine Wechselsignale mehr übertragen werden. Somit werden auch Ausschaltzeitpunkte des Steuerkreises 120 definiert übertragen und nicht durch die Restladung im Parallelkondensator Cp verzögert. Der Parallelkondensator Cp sieht das wieder geglättete Steuersignal für die Lastkreis-Ausgleichsschaltung vor, die an die Anschlüsse P+ und P- angeschlossen ist. Der Signaleingang der Trennschaltung wird somit über den Seriellkondensator Cs1 und über die Glättschaltung an den Steuerausgang P+2 übertragen, an den sich Lastkreis-Ausgleichsschaltung anschließt. In gleicher Weise wird das Signal über die Masse der Steuerseite GND über den Seriellkondensator Cs2 an den jeweiligen negativen Ausgang P-2 an der Ausgleichsschaltungsseite übertragen. Sowohl Serienkondensator Cs1 als auch Serienkondensator Cs2 sind mit einer Spannung vorgespannt, die der Potentialdifferenz zwischen Steuerseite und Ausgleichsschaltungsseite entspricht. Auf diese Weise wird Potentialdifferenz zwischen Steuerseite und Ausgleichsschaltungsseite hinsichtlich des Gleichanteils ausgeglichen, wohingegen der Wechselanteil übertragen wird und an die jeweiligen Ausgänge P+, P- weitergeleitet wird. Auf der Steuerseite ist eine gemeinsame Masse vorgesehen, wohingegen die Lastausgleichsseite auf Grund der zahlreichen Anzapfungen der Serienbatterieschaltung auf der Ausgleichsschaltungsseite jeweilige negative Ausgänge P-1-N vorgesehen sind. Die jeweiligen Ausgänge P+, P- einer Teilschaltung sehen das An-Signal für die jeweiligen Stromlenkungselemente Sw1-Sw3 vor, die sich an die Trennschaltung 110 anschließen. Die Lastkreis-Ausgleichsschaltung umfasst somit als Stromungselemente vorzugsweise MOSFET-Transistoren, deren Gate mit P+ einer Teilschaltung verbunden ist, beispielsweise P+2, und dessen Source an dem negativen Ausgang, beispielsweise P-2, angeschlossen ist.

Die Ausgänge des Steuerkreises 120 sind asymmetrisch und weisen eine gemeinsame Masse auf. Die Masse des Steuerkreises entspricht vorzugsweise der Masse des Bordnetzes. Bei symmetrischen Ausgängen des Steuerkreises 120 liegt das Wechselsignal zwischen den jeweiligen steuerkreisseitigen Anschlüssen der zwei Seriell-Kondensatoren Cs1,2 an. Die einzelnen Ausgänge der Trennschaltung 110, die von einem P+/P- -Paar gebildet werden, sind untereinander getrennt. Somit ist das Potential auf der Ausgleichsschaltungsseite der jeweiligen Trennschaltungen voneinander getrennt. Dadurch können sich diese auf verschiedenen Potentialniveaus befinden. Neben der Glättschaltung, die in Figur 2 dargestellt ist, kann auch eine Brückenschaltung mit vier Dioden vorgesehen sein, deren Vollwellenausgang an dem Glättungskondensator angeschlossen ist.

Die Serienkondensatoren Cs1, Cs2 sind mit dem Potentialunterschied zwischen Steuerseite und Ausgleichsschaltungsseite, d.h. Traktionsbatterieseite vorgespannt, die mehrere 100 V betragen kann. Um eine gute Kopplung zu erreichen, werden daher hohe Frequenzen von mindestens 100 kHz verwendet, wobei die Serienkapazitäten vorzugsweise im Pikofaradbereich sind, d.h. eine Kapazität kleiner als 1 nF haben. Gleichzeitig sind die Kondensatoren Cs1, Cs2 vorzugsweise mit einer hohen Nennspannung ausgelegt, vorzugsweise 400 V oder 600 V oder 800 V - 1000 V. Insbesondere eignen sich Keramikkondensatoren oder entsprechende Folienkondensatoren mit jeweiligen Spannungseigenschaften.

An die Potentialanzapfungen der seriellen Batterieschaltung können, neben den Stromlenkungselementen, auch Messeinrichtungen vorgesehen sein, vorzugsweise eine Messeinrichtung pro Zelle, deren Eingänge über hohe Widerstände (> 100 kOhm) mit der jeweiligen Zelle verbunden sind. Auf diese Weise lässt sich der Stromfluss bei Kurzschlüssen begrenzen. Das Stromlenkungselement ist vorzugsweise parallel zu Potentialanzapfungen angeschlossen, die zu einer zugeordneten Zelle führen, vorzugsweise über einen strombegrenzenden Lastwiderstand, der die Ausgleichsstromstärke begrenzt. Gemäß einer bevorzugten Ausführung ist der negative Anschluss der Ausgleichsschaltungsseite der erfindungsgemäßen Trennschaltung direkt mit dem negativen Pol einer Zelle verbunden. Der zugeordnete positive Ausgang P+ ist vorzugsweise mit dem Steuereingang des Stromlenkungselements verbunden, beispielsweise über einen Widerstand, wobei das Stromlenkungselement über einen Widerstand, der den Ausgleichsstrom begrenzt, mit dem positiven Pol der jeweiligen Zelle verbunden ist.

Die Zelle kann ein Plattenpaar oder eine Serienschaltung eines Plattenpaars umfassen, beispielsweise eine Zellenschaltung mit einer Nennspannung von 4-5 V. Als Zellen werden vorzugsweise gleichartige Lithium-Ionenakkus verwendet, die in großer Zahl (n > 100) in Serie geschaltet sind. Die serielle Batterieschaltung ist dafür ausgelegt, Rekuperationsenergie oder Wiederaufladungsenergie eines Verbrennungsmotors zu speichern und einen wesentlichen Beitrag zur notwendigen Fortbewegungsleistung eines Fahrzeugs beizutragen.

## Patentansprüche

1. Trennschaltung (10) zur galvanischen Trennung einer Lastkreis-Ausgleichsschaltung (30) eines Fahrzeug-Elektroantriebs von einem Steuerkreis (20), der zur Steuerung der Lastkreis-Ausgleichsschaltung vorgesehen ist, mit einer Ausgleichsschaltungsseite (32), die zur galvanischen Verbindung mit der Lastkreis-Ausgleichsschaltung eingerichtet ist, und mit einer Steuerseite (22), die zur galvanischen Verbindung mit dem Steuerkreis (20) eingerichtet ist,
wobei die Trennschaltung eine serielle kapazitive Verbindung (50) umfasst, die über die Ausgleichsschaltungsseite mit der Steuerseite verbunden ist,
wobei die Trennschaltung ferner eine Gleichrichterschaltung (70) umfasst, an die serielle kapazitive Verbindung (50) angeschlossen und eingerichtet ist, das modulierte Steuerkreis-Signal gleichzurichten und als Ausgleichsschaltungs-Steuersignal an die Lastkreis-Ausgleichsschaltung (30) abzugeben,
**dadurch gekennzeichnet,**
**dass** die Trennschaltung eine Modulatorschaltung (60) umfasst, die eingerichtet ist, das Steuerkreis-Signal mit einer Frequenz von größer als 1 Kilohertz zu modulieren und das modulierte Steuerkreis-Signal an die serielle kapazitive Verbindung (50) abzugeben, und
**dass** die Trennschaltung ferner eine Glättschaltung (80) umfasst, die an die Gleichrichterschaltung (70) angeschlossen und eingerichtet ist, das modulierte Steuerkreis-Signal zu glätten und als Ausgleichsschaltungs-Steuersignal an die Lastkreis-Ausgleichsschaltung (30) abzugeben, wobei die Glättschaltung (80) mindestens eine in Parallelschaltung vorgesehene Kapazität und/oder mindestens eine in Serienschaltung vorgesehene Induktivität umfasst.

2. Trennschaltung nach Anspruch 1, wobei Modulatorschaltung (60) einen amplitudenmodulierenden Modulator umfasst, der die Amplitude eines Wechselspannungssignal gemäß dem Amplitudenverlauf des Steuerkreis-Signal moduliert, oder einen frequenzmodulierenden Modulator umfasst, der die Frequenz eines Wechselspannungssignal gemäß dem Amplitudenverlauf des Steuerkreis-Signal moduliert.

3. Trennschaltung nach einem der vorangehenden Ansprüche, die eine Spannungsdopplerschaltung umfasst, welche zur kapazitiven Einkopplung eines Eingangssignals die serielle kapazitive Verbindung (Cs1, Cs2) sowie eine daran angeschlossene zweiphasige Gleichrichterschaltung (D1, D2) auf der Ausgleichsschaltungsseite, wobei ein Ausgang der Gleichrichterschaltung parallel an einen Parallel-Glättungskondensator CP angeschlossen ist, an dessen Anschlüssen ein definierter Parallel-Lastwiderstand R angeschlossen ist.

4. Ausgleichsschaltung mit einer Lastkreis-Ausgleichsschaltung (30), die Lastanschlüsse für Potentialanzapfungen einer seriellen Batterieschaltung (40) eines Fahrzeug-Elektroantriebs umfasst, die mit mindestens einem Stromlenkungselement (SW) verbunden sind, das eingerichtet ist, einen Stromfluss zwischen verschiedenen Potentialanzapfungen zu steuern, wobei die Ausgleichsschaltung mindestens eine Trennschaltung (10, 110) nach einem der oben genannten Ansprüche umfasst, und das mindestens eine Stromlenkungselement über die serielle kapazitive Verbindung (Cs1, 2) mit der Steuerseite verbunden ist und galvanisch mit der der Ausgleichsschaltungsseite verbunden ist.

5. Verfahren zur galvanisch entkoppelten Übertragung eines Ausgleich-Steuersignals an eine Lastkreis-Ausgleichsschaltung (30) mittels Trennschaltung gemäss Anspruch 1, mit den Schritten:
Vorsehen eines Ausgleich-Steuersignals;
Vorsehen einer seriellen kapazitiven Verbindung (50) mit einem Steuereingang der Lastkreis-Ausgleichsschaltung; und
Übertragen des Ausgleich-Steuersignals über die serielle kapazitive Verbindung (50), wobei das Verfahren ferner den Schritt umfasst:
vor dem Übertragen des Ausgleich-Steuersignals: amplituden- oder frequenzmodulieren eines Wechselspannungssignals gemäß dem Ausgleich-Steuersignals mit einer Frequenz von größer als 1 Kilohertz,
wobei der Schritt des Übertragens umfasst: Übertragen des Ausgleich-Steuersignals als moduliertes Steuerkreis-Signal an die Lastkreis-Ausgleichsschaltung und Gleichrichten des moduliertes Steuerkreis-Signals und Glätten des gleichgerichteten Steuerkreis-Signals.

## Claims

1. Isolation circuit (10) for the DC isolation of a load circuit-compensation circuit (30) of a vehicle electric drive from a control loop (20) that is provided to control the load circuit-compensation circuit, said isolation circuit having a compensation circuit side (32), which is configured for DC connection to the load circuit-compensation circuit, and having a control side (22), which is configured for DC connection to the control loop (20),
wherein the isolation circuit comprises a series capacitive connection (50), which is connected to the control side by means of the compensation circuit side, wherein the isolation circuit further comprises a rectifier circuit (70), is connected to the series capacitive connection (50) and is configured to rectify the modulated control loop signal and to emit said signal as a compensation circuit control signal to the load circuit-compensation circuit (30),
**characterized**
**in that** the isolation circuit comprises a modulator circuit (60), which is configured to modulate the control loop signal with a frequency of greater than 1 kilohertz and to emit the modulated control loop signal to the series capacitive connection (50), and
**in that** the isolation circuit further comprises a smoothing circuit (80), which is connected to the rectifier circuit (70) and is configured to smooth the modulated control loop signal and to emit said signal as a compensation circuit control signal to the load circuit-compensation circuit (30), wherein the smoothing circuit (80) comprises at least one capacitance provided in a parallel circuit and/or at least one inductance provided in a series circuit.

2. Isolation circuit according to Claim 1, wherein modulator circuit (60) comprises an amplitude-modulating modulator, which modulates the amplitude of an AC voltage signal in accordance with the amplitude profile of the control loop signal, or comprises a frequency-modulating modulator, which modulates the frequency of an AC voltage signal in accordance with the amplitude profile of the control loop signal.

3. Isolation circuit according to either of the preceding claims, which comprises a voltage doubler circuit, which, for the purpose of capacitive coupling-in of an input signal, the series capacitive connection (Cs1, Cs2) and a two-phase rectifier circuit (D1, D2) connected thereto on the compensation circuit side, wherein an output of the rectifier circuit is connected in parallel with a parallel smoothing capacitor CP, to the terminals of which a defined parallel load resistor R is connected.

4. Compensation circuit having a load circuit-compensation circuit (30), which comprises load terminals for potential taps of a series battery circuit (40) of a vehicle electric drive, said load terminals being connected to at least one current guiding element (SW), which is configured to control a flow of current between different potential taps, wherein the compensation circuit comprises at least one isolation circuit (10, 110) according to one of the aforementioned claims, and the at least one current guiding element is connected to the control side by means of the series capacitive connection (Cs1, 2) and is DC-connected to the the compensation circuit side.

5. Method for the DC-decoupled transmission of a compensation control signal to a load circuit-compensation circuit (30) by means of isolation circuit according to Claim 1, having the steps of:
providing a compensation control signal;
providing a series capacitive connection (50) having a control input of the load circuit-compensation circuit; and
transmitting the compensation control signal by means of the series capacitive connection (50), wherein the method further comprises the step of:
before transmitting the compensation control signal: amplitude-modulating or frequency-modulating an AC voltage signal in accordance with the compensation control signal with a frequency of greater than 1 kilohertz,
wherein the transmitting step comprises: transmitting the compensation control signal as a modulated control loop signal to the load circuit-compensation circuit and rectifying the modulated control loop signal and smoothing the rectified control loop signal.

## Revendications

1. Montage de séparation (10) assurant la séparation galvanique d'un montage d'équilibrage (30) du circuit de charge d'un entraînement électrique de véhicule vis-à-vis d'un circuit de commande (20) prévu pour la commande du montage d'équilibrage du circuit de charge, le montage présentant un côté (32) de montage d'équilibrage conçu pour assurer la liaison galvanique avec le montage d'équilibrage de circuit de charge et un côté de commande (22) conçu pour assurer la liaison galvanique avec le circuit de commande (20),
le montage de séparation comportant une liaison capacitive série (50) reliée au côté de commande par l'intermédiaire du montage d'équilibrage,
le montage de séparation comportant en outre un montage de redressement (70), est raccordé à la liaison capacitive série (50) et conçu pour redresser le signal modulé du circuit de commande et le délivrer comme signal de commande du montage d'équilibrage au montage d'équilibrage (30) du circuit de charge,
**caractérisé en ce que**
le montage de séparation comporte un montage de modulation (60) conçu pour moduler le signal du circuit de commande à une fréquence supérieure à 1 kHz et délivrer le signal modulé du circuit de commande à la liaison capacitive série (50) et
**en ce que** le montage de séparation comporte en outre un montage de lissage (80) raccordé au montage de redressement (70) et conçu pour lisser le signal modulé de circuit de commande et le délivrer comme signal de commande de montage d'équilibrage au montage (30) d'équilibrage du circuit de charge, le montage de lissage (80) comportant au moins une inductance raccordée en parallèle et/ou au moins une inductance raccordée en série.

2. Montage de séparation selon la revendication 1, dans lequel montage de modulation (60) comporte un modulateur d'amplitude qui module l'amplitude d'un signal en tension alternative selon l'évolution de l'amplitude du signal de circuit de commande ou comporte un modulateur de fréquence qui module la fréquence d'un signal en tension alternative en fonction de l'évolution de l'amplitude du signal du circuit de commande.

3. Montage de séparation selon l'une des revendications précédentes, qui comporte un circuit Doppler en tension qui, pour le couplage capacitif d'un signal d'entrée, au montage d'équilibrage la liaison capacitive série (Cs1, Cs2) et un montage de redressement (D1, D2) à deux phases raccordé à cette dernière, la sortie du montage de redressement étant raccordée en parallèle à un condensateur parallèle de lissage CP aux bornes duquel est raccordée une résistance de charge parallèle R définie.

4. Montage d'équilibrage présentant un montage d'équilibrage (30) de circuit de charge qui comporte des bornes de charge permettant le prélèvement de potentiels d'un montage série (40) de batteries d'un entraînement électrique de véhicule, les bornes de charge étant raccordées à au moins un élément (SW) de déviation de courant conçu pour commander l'écoulement du courant entre différents prélèvements de potentiel, le montage d'équilibrage comportant au moins un montage de séparation (10, 110) selon l'une des revendications précédentes et le ou les éléments de déviation de courant étant reliés à la commande par l'intermédiaire de la liaison capacitive série (Cs1, Cs2) et galvaniquement au au montage d'équilibrage.

5. Procédé de transfert, dans des conditions de découplage galvanique, d'un signal de commande d'équilibrage à un montage d'équilibrage (30) de circuit de charge au moyen de montage de séparation selon la revendication 1, le procédé comportant les étapes suivantes :
prévoir un signal de commande d'équilibrage,
prévoir une liaison capacitive série (50) avec une entrée de commande du montage d'équilibrage de circuit de charge et
transférer le signal de commande d'équilibrage par l'intermédiaire de la liaison capacitive série (50),
le procédé comportant en outre l'étape qui consiste à :
avant le transfert du signal de commande d'équilibrage, moduler en amplitude ou en fréquence un signal de tension alternative selon le signal de commande d'équilibrage dont la fréquence est supérieure à 1 kilohertz,
l'étape de transfert comportant le transfert du signal de commande d'équilibrage en tant que signal modulé de circuit de commande au montage d'équilibrage du circuit de charge et
redresser le signal modulé de circuit de commande et lisser le signal redressé du circuit de commande.
